# EUROPÄISCHE PATENTSCHRIFT

(11) **EP 2 950 078 B1**
(45) Veröffentlichungstag und Bekanntmachung des Hinweises auf die Patenterteilung: **07.08.2019**
(21) Anmeldenummer: 14001896.1
(22) Anmeldetag: 30.05.2014
(51) Int. Cl.: G01N 9/14, G01N 9/20

(54) **Verfahren zum Bestimmen der Dichte eines Flüssiggasses**
Method to determine the density of a liquid gas
Procédé destinés à la détermination de l'étanchéité d'un gaz liquide

(43) Veröffentlichungstag der Anmeldung: 02.12.2015
(73) Patentinhaber: FAFNIR GmbH, 22765 Hamburg (DE)
(72) Erfinder: Schrittenlacher, Wolfgang, 21075 Hamburg (DE)
(74) Vertreter: Uexküll & Stolberg

(56) Entgegenhaltungen:
- EP-A1- 2 196 781
- EP-A2- 0 441 770
- CN-A- 103 411 851
- US-A- 4 674 322

## Beschreibung

Die Erfindung betrifft ein Verfahren zum Bestimmen der Dichte eines Flüssiggases. Die derart gemessene bzw. bestimmte Dichte kann bei der Datenverwaltung auf Tankstellen, für die Ermittlung von getankten Flüssigkeitsmassen und für die Qualitätssicherung benutzt werden. Denn für die Bestimmung der Qualität von Flüssigkeiten ist ihre Dichte ein wichtiger Indikator.

Seit einigen Jahren werden Flüssiggase (LPG) nicht nur zu Heizzwecken, sondern auch für die Betankung von Fahrzeugen benutzt. Flüssiggas ist eine wechselnde Mischung aus hauptsächlich Propan und Butan und deren Isomeren. Hinweise zur Zusammensetzung und deren Bestimmung sind in den Normen DIN EN 589, DIN 51618 und DIN 51622 niedergelegt. Die Dichte von Flüssiggasen ist deutlich niedriger als die normaler Kraftstoffe und liegt je nach Temperatur und Zusammensetzung zwischen 0,44 kg/l und 0,66 kg/l. Da die Zusammensetzung starken Schwankungen unterworfen ist, besteht die Anforderung einer Überwachung an den Tankstellen und in den Lagertanks. Weiterhin werden in einigen Ländern Kraftstoffe auch nach Gewicht (Masse) verkauft, so dass hier ebenfalls eine Notwendigkeit besteht, nicht nur das Volumen, sondern auch die Dichte zu bestimmen.

Die Dichte von Flüssigkeiten kann nach verschiedenen Methoden gemessen werden. Für die Anwendung bei Heiz- und Kraftstoffen, die in Tanks gelagert sind und kontinuierlich überwacht werden sollen, kommen nur bestimmte Messverfahren in Betracht. Wie z.B. in EP 2 196 781 A1 ausführlich erläutert, sind Dichtemessverfahren, die zusammen mit einer Füllstandmessung in einem Sensorsystem umgesetzt werden können, besonders vorteilhaft, insbesondere im Zusammenwirken mit der magnetostriktiven Füllstandmessung. Hierbei wird ein geführter Auftriebskörper benutzt, der mit seiner Auftriebskraft ein elastisches Element deformiert und somit im Gleichgewichtszustand eine bestimmte Verschiebung erfährt, die in eindeutiger Weise von der Dichte der Flüssigkeit abhängt. Diese Verschiebung wird mit dem gleichen magnetostriktiven Messprinzip bestimmt, mit der die Position des Füllstandes oder ggf. einer Trennschicht bestimmt wird. Dadurch wird die gesamte Messvorrichtung sehr kompakt.

Eine besondere Möglichkeit besteht darin, das elastische Element durch ein Gewichtselement, d.h. durch eine Kette zu ersetzen, wie es in RU 2 273 838 C1 beschrieben wird. Dies erlaubt eine empfindliche Messung dadurch, dass der Verschiebeweg des Auftriebskörpers pro Dichteänderung sehr groß gewählt werden kann. Dadurch fallen die Messfehler der magnetostriktiven Positionsmessung nur noch wenig ins Gewicht. Ein Nachteil dieses Konzept besteht darin, dass sich bei der im Tank bei der Befüllung auftretenden lateralen Strömung die Kette verschlingen kann und die Messung dadurch blockiert wird.

EP 0 441 770 A2 offenbart eine Vorrichtung zum Messen der Dichte von bei Raumtemperatur und Luftdruck flüssigem Kraftstoff. Dabei wird ein kapazitives Messverfahren angewendet, bei dem sich ein kugelförmiger Auftriebskörper in einem Gehäuse mit einem Flüssigkeitszulauf und einem Flüssigkeitsablauf befindet. Der Auftriebskörper ist an einer Feder im Kugelmittelpunkt einer kugelkalottenförmigen Elektrode aufgehängt, die den Gehäuseboden bildet. Je nach Dichte der Flüssigkeit ist die Auftriebskraft auf den Auftriebskörper unterschiedlich, was sich auf die Federlänge und damit den Abstand zwischen Auftriebskörper und kugelkalottenförmiger Elektrode auswirkt und die gemessene Kapazität beeinflusst.

US 4 674 322 A beschreibt ein Instrument zum gleichzeitigen Messen der Viskosität, Dichte und Oberflächenspannung eines Fluids, bei dem Gas in einer Flüssigkeit gelöst ist. Das Instrument basiert auf dem Prinzip eines eindimensionalen, gedämpften harmonischen Oszillators.

CN 103 411 851 A zeigt ein Instrument zum Messen der Dichte einer Flüssigkeit mit einem Auftriebskörper, der an einer Federwaage hängt und von oben in ein offenes Gefäß mit der Flüssigkeit eingetaucht werden muss.

Bei Flüssiggasen besteht ein Problem darin, dass ein Auftriebskörper mit einer Dichte notwendig ist, die kleiner als die zu messende Dichte von ca. 0,4 kg/l ist. Ein solcher Auftriebskörper erfordert eine leichte, dünnwandige Bauweise und ist daher nur wenig druckstabil. In Flüssiggasen ist aber der Druck in der Regel recht hoch. Flüssiggasbehälter sind wechselnden Drucken ausgesetzt, die dem Dampfdruck der gelagerten Flüssigkeit entsprechen. Die Behälter sind geschlossen und haben ein Sicherheitsventil, das bei einem Druck von ca. 16 bar automatisch öffnet. Der Auftriebskörper muss daher diesem hohen Druck standhalten können.

Es ist Aufgabe der Erfindung, ein Verfahren zum Bestimmen der Dichte eines Flüssiggases zu schaffen, das also mit Flüssiggasen verwendet werden kann, also unter Bedingungen mit hohem Druck und geringer Dichte.

Diese Aufgabe wird gelöst durch ein Verfahren zum Bestimmen der Dichte eines Flüssiggases, wie im Anspruch 1 definiert. Vorteilhafte Ausgestaltungen der Erfindung ergeben sich aus den Unteransprüchen.

Die Vorrichtung zum Bestimmen der Dichte einer Flüssigkeit, die in dem Verfahren nach Anspruch 1 verwendet wird, hat einen Auftriebskörper, mindestens eine an dem Auftriebskörper angreifende Feder, deren elastische Deformation ein Maß für die Auftriebskraft des Auftriebskörpers ist und die daher als Messfeder bezeichnet ist, und einen Magneten, der für die Erfassung der elastischen Deformation der Messfeder mittels eines magnetostriktiven Positionsmesssystems eingerichtet ist. Das magnetostriktive Positionsmesssystem kann Bestandteil der Vorrichtung, kann aber auch eine externe Komponente sein, die z.B. in einem Lagertank für Flüssiggas bei einem Füllstandmesssystem ohnehin vorgesehen ist. Soweit ist die Vorrichtung, die in dem Verfahren nach Anspruch 1 verwendet wird, bereits aus der oben erwähnten EP 2 196 781 A1 bekannt.

Da in Anspruch 1 die Vorrichtung zum Bestimmen der Dichte von Flüssiggas verwendet wird, muss der Auftriebskörper dem in dem Flüssiggas herrschenden Druck standhalten können und relativ stabil gefertigt sein. Daher ist der Quotient aus Masse und Volumen des Auftriebskörpers (also die durchschnittliche Dichte des Auftriebskörpers) größer als die zu bestimmende Dichte (die bei Flüssiggas ohnehin relativ gering ist). Nun ist die Auftriebskraft des Auftriebskörpers gleich dem Gewicht der von dem Auftriebskörper verdrängten Flüssigkeit, also gleich dem Produkt aus dem Volumen des Auftriebskörpers und der Dichte (bzw. des spezifischen Gewichts) der Flüssigkeit. Die Auftriebskraft reicht folglich nicht aus, um den Auftriebskörper aufschwimmen zu lassen. Eine Vorrichtung wie aus EP 2 196 781 A1 bekannt würde daher nicht funktionieren.

Die Erfindung löst dieses Problem, indem der Auftriebskörper durch Federkraft in Richtung der Auftriebskraft in einen Arbeitsbereich der Messfeder vorspannt wird. Das heißt, die Auftriebskraft und die Federkraft zusammen kompensieren die Gewichtskraft des Auftriebskörpers, so dass der Auftriebskörper aufschwimmt und sich nun frei nach oben oder unten bewegen kann. Damit befindet er sich im Arbeitsbereich der Messfeder, die nun mehr oder weniger stark deformiert bzw. gespannt wird, und zwar genau so stark, dass die Summe der auf den Auftriebskörper einwirkenden Kräfte verschwindet.

Je nach Größe der Auftriebskraft wird die Messfeder also mehr oder weniger stark deformiert. Wenn sich der Magnet bei einer Deformation der Feder mitbewegt, ändert sich seine Position, was von dem magnetostriktiven Positionsmesssystem erfasst werden kann. Diese Position ist ein Maß für die Auftriebskraft und somit für die Dichte der Flüssigkeit.

Vorzugsweise ist die Messfeder dazu eingerichtet, die zum Vorspannen des Auftriebskörpers in Richtung der Auftriebskraft dienende Federkraft auszuüben. Dies lässt sich zum Beispiel erreichen, indem der Auftriebskörper an der Messfeder aufgehängt ist. Die Messfeder zieht dann nach oben und unterstützt die Auftriebskraft.

Bei einer vorteilhaften Ausgestaltung einer derartigen Anordnung liegt der Auftriebskörper ohne Einwirkung der Auftriebskraft (z.B. wenn keine Flüssigkeit eingefüllt ist) an einem Anschlag an (z.B. indem er auf einer Unterstützungsfläche aufliegt). Dabei zieht zwar die Messfeder nach oben, aber das reicht nicht aus, um den Auftriebskörper von dem Anschlag wegzubewegen. Erst unter Einwirkung der Auftriebskraft kann sich der Auftriebskörper von dem Anschlag lösen und einen Abstand dazu einnehmen. Dann wird zwar die Zugkraft der Messfeder etwas geringer, aber insgesamt stellt sich ein Gleichgewicht im Arbeitsbereich der Messfeder ein. Die Messfeder wird dabei je nach Größe der Auftriebskraft mehr oder weniger stark deformiert, was - wie bereits erläutert - ein Maß für die Dichte der Flüssigkeit ist. Der Zusammenhang zwischen Deformation und Dichte ist weitgehend linear.

Im Prinzip kann auch eine andere Feder als die mindestens eine Messfeder die zur Unterstützung der Auftriebskraft erforderliche Federkraft ausüben. Man erhält dann ein Federsystem, das aber in der Regel ebenfalls linear reagiert, d.h. die Verschiebung des Magneten ist eine weitgehend lineare Funktion der Auftriebskraft und somit der zu bestimmenden Dichte.

Eine geeignete Vorspannung der Feder(n) und den Arbeitsbereich der Messfeder(n) kann man durch Versuche bestimmen. Der Zusammenhang zwischen der Deformation der Messfeder(n) (bzw. der zugehörigen elektrischen Signale des magnetostriktiven Positionsmesssystems) bei gegebener Dichte der Flüssigkeit lässt sich z.B. durch Kalibrierung ermitteln.

Bei bevorzugten Ausführungsformen der Erfindung ist die Messfeder als Spiralblattfeder gestaltet, die z.B. aus einem ebenen Blech gefertigt sein kann.

Unter einer Spiralblattfeder ist hier nicht eine wie eine Uhrfeder spiralartig aufgewickelte Blattfeder zu verstehen, deren spiralartiger Verlauf durch plastische Deformation senkrecht zu ihrer Blattebene erreicht wird, sondern eine Feder, wie sie durch eine spiralartige Schnittführung in einem dünnen, ebenen Ausgangsmaterial hergestellt werden kann. Um nach einer solchen Schnittführung die Federform der Spiralblattfeder im unbelasteten Zustand zu erreichen, kann die Spiralblattfeder ins Dreidimensionale verformt werden, also entlang einer Achse, die senkrecht auf der Ebene des Ausgangsmaterials steht. Es kann jedoch auch vorteilhaft sein, wenn die Spiralblattfeder im unbelasteten Zustand die ebene Form des Ausgangsmaterials annimmt, so dass eine solche plastische Verformung ins Dreidimensionale unterbleibt.

Eine Uhrfeder ist in radialer Richtung sehr leicht elastisch verformbar. Eine Spiralblattfeder kann dagegen dank ihrer Geometrie in radialer Richtung ein hohes Widerstandsmoment besitzen, so dass sich mit ihrer Hilfe eine sichere radiale Führung des Auftriebskörpers erreichen lässt. Dadurch kann verhindert werde, dass der Auftriebskörper mit seiner Führung in Berührung kommt, so dass irgendwelche Reibungskräfte, die der Auftriebskörper erfährt, minimiert werden. In axialer Richtung kann die Spiralblattfeder dagegen sehr weich und damit sehr empfindlich sein. Dies führt zu einer hohen Empfindlichkeit der Vorrichtung, die in dem Verfahren nach Anspruch 1 verwendet wird, da bereits geringe Unterschiede in der Dichte bzw. den Auftriebskräften in einer relativ großen Wegänderung des Auftriebskörpers resultieren. Eine Spiralblattfeder kann eingängig (also als gewöhnliche Spirale), aber auch mit zwei Gängen oder mehr als zwei Gängen ausgestaltet sein. Im letzteren Fall geht vom Zentrum der Feder mehr als ein Spiralgang aus.

In EP 2 196 781 A1 ist eine Vorrichtung zum Bestimmen der Dichte einer Flüssigkeit mit Hilfe eines Auftriebskörpers, an dem eine Spiralblattfeder angreift, im Detail beschrieben.

Bei einer vorteilhaften Ausführungsform der Erfindung weist der Auftriebskörper einen oberen Bereich und einen unteren Bereich auf, und es sind zwei Messfedern vorgesehen, die vorzugsweise von gleicher Bauart sind. Dabei greift die eine Feder am oberen Bereich des Auftriebskörpers und die andere Feder am unteren Bereich des Auftriebskörpers an. Diese Anordnung ermöglicht eine besonders sichere radiale Führung des Auftriebskörpers, wodurch sich Reibungskräfte zwischen dem Auftriebskörper und einer Führung des Auftriebskörpers praktisch ausschließen lassen. Da in diesem Fall zwei Messfedern verwendet werden, ist bei gegebener, in axialer Richtung wirkender resultierender Kraft auf den Auftriebskörper der Verschiebeweg zwar kleiner als bei einer einzigen Feder. Aber die Federn können weich und empfindlich ausgestaltet sein, wie bereit erläutert, so dass sich die Verwendung von zwei Federn nicht nachteilig auswirkt. Die Federkraft zum Unterstützen der Auftriebskraft wird hierbei vorzugsweise von beiden Messfedern ausgeübt.

Außer dem bereits erwähnten Magneten kann ferner ein fixierter Referenzmagnet vorgesehen sein, wobei die Differenz der Positionen des Magneten und des Referenzmagneten entlang eines Messdrahts des magnetostriktiven Positionsmesssystems ein Maß für die zu bestimmende elastische Deformation der Messfeder ist. Dies ermöglicht es, die Vorrichtung, die in dem Verfahren nach Anspruch 1 verwendet wird, als Einheit zu konstruieren und z.B. in Verbindung mit einem Füllstandmesssystem zu benutzen, das bereits in einem Lagertank vorhanden ist. Wenn sich der Magnet z.B. in dem Auftriebskörper befindet, so dass er die Bewegung des Auftriebskörpers mitmacht, der Referenzmagnet dagegen z.B. an einem stationären Gegenlager der Messfeder, ergibt sich aus der Differenz der Positionen des Magneten und des Referenzmagneten die Deformation der Messfeder, unabhängig davon, in welcher Höhe die Vorrichtung an dem magnetostriktiven Füllstandmesssystem montiert ist. Wenn dagegen nur ein Magnet vorhanden ist, der die Bewegung bzw. Deformation der Messfeder mitmacht, hängt die Einstellung der Vorrichtung von der absoluten Höhe an dem magnetostriktiven Positionsmesssystem ab und kann sich z.B. bei Wartungsarbeiten verschieben.

Vorzugsweise weist der Auftriebskörper eine Aussparung zur Aufnahme eines Führungsrohrs auf. Das Führungsrohr lässt sich vorzugsweise über ein Schutzrohr für den Messdraht eines magnetostriktiven Positionsmesssystems schieben.

Bei vorteilhaften Ausführungsformen ist als magnetostriktives Positionsmesssystem ein in einem Lagertank für Kraftstoff oder Flüssiggas ohnehin vorhandenes magnetostriktives Positionsmesssystem vorgesehen, das als Füllstandmesssystem (und/oder Trennschichtmesssystem) eingesetzt wird.

Derartige Füllstandmesssysteme sind weit verbreitet. Sie enthalten einen vorzugsweise vertikal ausgerichteten Messdraht in einem Schutzrohr, der mit einer Messelektronik verbunden ist. Das Schutzrohr dient gleichzeitig zum Führen eines Schwimmers, in dem ein Magnet montiert ist und der an der Oberfläche des Kraftstoffs schwimmt. Die Position dieses Magneten, also der Füllstand, kann mit Hilfe des magnetostriktiven Effekts ermittelt werden. Da die Messelektronik in der Lage ist, die Messsignale in Bezug auf mehrere Magneten, die in verschiedenen Höhen positioniert sind, zu verarbeiten, sind magnetostriktive Positionsmesssysteme z.B. in einem Lagertank für Kraftstoff häufig mit einem zweiten Schwimmer versehen, der im unteren Bereich des Lagertanks an einer Grenzfläche zwischen Wasser und dem spezifisch leichteren Kraftstoff schwimmt. Auf diese Weise ist es möglich, den Wassergehalt in dem Lagertank zu erfassen. Ein häufig in einem Lagertank bereits vorhandenes magnetostriktives Positionsmesssystem mit zugehöriger Messelektronik ist also in der Lage, die Positionen mehrerer Magneten zu bestimmen, und kann daher mit verhältnismäßig geringem Aufwand (im Wesentlichen Programmieraufwand) so umgerüstet werden, dass zusätzlich die Positionen des Magneten und gegebenenfalls des Referenzmagneten der Vorrichtung zum Bestimmen der Dichte, die in dem Verfahren nach Anspruch 1 verwendet wird, gemessen werden können.

Als Lagertank für Kraftstoff oder Flüssiggas kommen insbesondere Lagertanks auf einer Tankstelle oder in einem Tanklager in Betracht. Die Dichte kann aber auch in einem Nutzlasttank eines Tankkraftfahrzeugs in der erläuterten Weise bestimmt werden.

Bei einer vorteilhaften Ausgestaltung der Erfindung werden mehrere Auftriebskörper mit zugeordneten Messfedern und Magneten in unterschiedlichen Höhen des magnetostriktiven Positionsmesssystems eines Lagertanks angeordnet. Dies erlaubt es, die Dichte von Kraftstoff oder Flüssiggas in unterschiedlichen Höhen zu bestimmen. Wie bereits erläutert, ist ein magnetostriktives Positionsmesssystem grundsätzlich in der Lage, die Positionen oder Höhen mehrerer Magnete zu unterscheiden.

Die für die Bestimmung der Dichte erforderlichen Rechenoperationen können auf einem in der Nähe des Lagertanks, also z.B. im Bereich einer Tankstelle vorhandenen Rechner durchgeführt werden. In die Berechnung gehen das bekannte Volumen des vollständig in die Flüssigkeit eintauchenden Auftriebskörpers, das bekannte Gewicht des Auftriebskörpers, die durch vorherige Kalibrierungsmessungen ermittelten Eigenschaften der Feder(n) bzw. Messfeder(n) sowie die gemessene Position des Magneten (bzw. die Differenz der gemessenen Positionen von Magnet und Referenzmagnet) ein, in einer dem Fachmann verständlichen Weise.

In Zusatzschritten zu dem Verfahren zum Bestimmen der Dichte kann die in der beschriebenen Weise ermittelte bzw. bestimmte Dichte für eine Vielzahl von Anwendungen benutzt werden.

Ein großes Anwendungsgebiet hierfür ist die Datenverwaltung und die Qualitätssicherung auf einer Tankstelle. So kann der gemessene bzw. bestimmte Dichtewert für das Flüssiggas in einem Lagertank mit dem über eine Füllstandmessung ermittelten Volumen des Flüssiggases in dem Lagertank multipliziert werden, um die Masse des Flüssiggases in dem Lagertank zu berechnen. Dies kann für Abrechnungszwecke sinnvoll sein.

Ferner ist die Dichte einer Flüssigkeit ein Maß für die Zusammensetzung und/oder Qualität der Flüssigkeit, so dass man von der bestimmten Dichte auf die Zusammensetzung oder -qualität z.B. des Flüssiggases schließen kann.

Zusätzliche Möglichkeiten ergeben sich, wenn ein Alarm und/oder eine Notfallabschaltung ausgelöst werden, falls die mit Hilfe der Vorrichtung, die in dem Verfahren nach Anspruch 1 verwendet wird, bzw. des erfindungsgemäßen Verfahrens bestimmte Dichte außerhalb eines vorgegebenen Bereichs liegt. Ein Beispiel ist die Unterscheidung von Kohlenwasserstoffen und Wasser durch eine Dichtemessung, wobei gegebenenfalls ein Alarm ausgelöst wird, wenn die Dichtemessung auf das Vorliegen der falschen Flüssigkeit hinweist.

Ferner können die im Laufe der Zeit gemessenen Werte für die Dichte aufgezeichnet werden, um den Dichteverlauf z.B. in einem Lagertank für Flüssiggas zu protokollieren. Dabei kann es sinnvoll sein, zusätzlich die Temperatur der Flüssigkeit zu messen und die gemessenen Temperaturwerte zusammen mit den zugeordneten Dichtewerten aufzuzeichnen. So lassen sich z.B. temperaturkompensierte Dichtewerte bestimmen. Durch eine derartige Aufzeichnung und Dokumentation der Dichte können Qualitätstrends nachgewiesen werden.

Es ergeben sich also zahlreiche Anwendungsmöglichkeiten in der Qualitätssicherung und der Datenverwaltung, z.B. im Tankstellenbereich, bei Tankfahrzeugen oder in einem Tanklager, und auch für andere Flüssigkeiten, insbesondere unter Druck verflüssigte Gase, die nicht Kraftstoffe sind.

Im Folgenden wird die Erfindung anhand von Ausführungsbeispielen weiter erläutert. Die Zeichnungen zeigen in
- Figur 1: eine Seitenansicht eines magnetostriktiven Füllstand- und Trennschichtmesssystems, das mit einer Vorrichtung zum Bestimmen der Dichte einer Flüssigkeit, die in dem erfindungsgemäßen Verfahren verwendet wird, ausgerüstet ist,
- Figur 2: einen Längsschnitt durch die Vorrichtung zum Bestimmen der Dichte einer Flüssigkeit gemäß Figur 1, wobei zwei Spiralblattfedern der Vorrichtung auch dreidimensional angedeutet sind, und
- Figur 3: eine Projektion einer Spiralblattfeder auf die Papierebene, was gleichzeitig die Herstellung der Spiralblattfeder veranschaulicht.

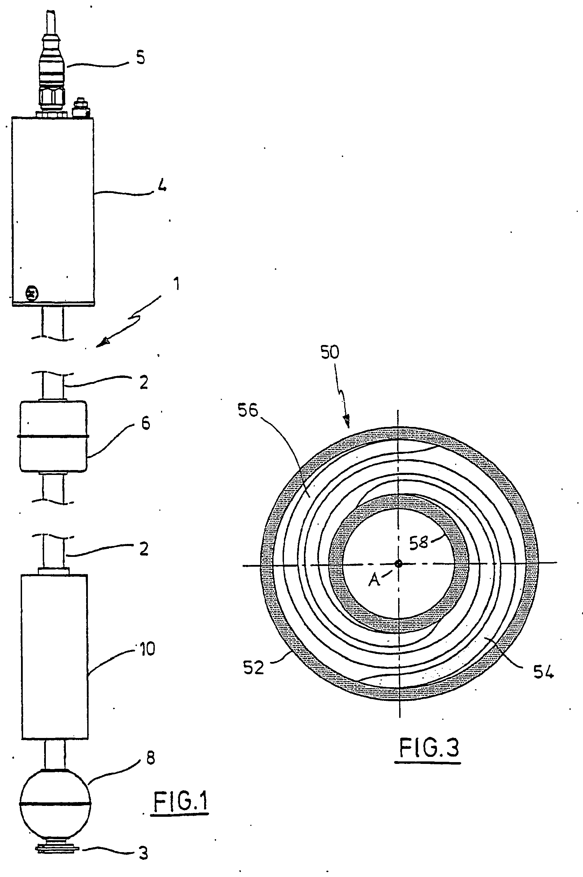

In Figur 1 ist zunächst ein herkömmliches Füllstand- und Trennschichtmesssystem 1 dargestellt, das mit einem magnetostriktiven Positionsmesssystem versehen ist und z.B. in einem Lagertank für Flüssiggas eingebaut sein kann.

Das Füllstand- und Trennschichtmesssystem 1 weist ein Schutzrohr 2 auf, das bis zu einer Endverbreiterung 3 an seinem unteren Ende reicht. Im eingebauten Zustand befindet sich die Endverbreiterung 3 kurz vor der tiefsten Stelle eines Lagertanks.

Im Inneren des Schutzrohrs 2 verläuft auf dessen Längsachse ein Messdraht eines magnetostriktiven Positionsmesssystems, der zu einer Elektronikeinheit 4 geführt ist. Die Elektronikeinheit 4 enthält an ihrer Oberseite einen Anschluss 5, um ein Signalkabel anzuschließen, das mit einer externen Auswerte- und Steuereinrichtung verbunden werden kann.

Magnetostriktive Messsystems sind bekannt, wie eingangs erläutert. Dabei wird ein Permanentmagnet als Positionsgeber genutzt. Durch den Magnetostriktionseffekt werden in einem magnetostriktiven Wellenleiter, hier dem in dem Schutzrohr 2 enthaltenen Messdraht, Ultraschallwellen erzeugt. Die Laufzeit dieser Ultraschallwellen kann mit hoher Präzision gemessen werden, wozu hier die Elektronikeinheit 4 genutzt wird, so dass sich die Position des Permanentmagneten z.B. bis auf 10 *µ*m genau reproduzierbar bestimmen lässt. Es ist auch möglich, eine größere Anzahl von solchen magnetischen Positionsgebern auf einem magnetostriktiven Wellenleiter gleichzeitig oder praktisch gleichzeitig zu messen, was bereits bei dem Füllstand- und Trennschichtmesssystem in seiner herkömmlichen Ausgestaltung ausgenutzt wird.

Dazu ist ein Füllstandschwimmer 6 auf dem Schutzrohr 2 geführt, der an der Oberfläche der in dem Lagertank befindlichen Flüssigkeit schwimmt. Im Inneren des Füllstandschwimmers 6 befindet sich ein Permanentmagnet, mit dessen Hilfe über den Magnetostriktionseffekt die Position des Füllstandschwimmers 6, also der Füllstand in dem Lagertank, bestimmt werden kann.

Im unteren Bereich des Füllstand- und Trennschichtmesssystems 1 ist ein Trennschichtschwimmer 8 angeordnet, der ebenso wie der Füllstandschwimmer 6 längs des zur Führung dienenden Schutzrohrs 2 bewegbar ist und ebenfalls einen Permanentmagneten enthält. Der Trennschichtschwimmer 8 ist auf einen anderen Dichtebereich abgestimmt und schwimmt im Ausführungsbeispiel an einer Grenzfläche zwischen Wasser und spezifisch leichterem Flüssiggas. Daher ermöglicht es der Trennschichtschwimmer, den Pegel von Wasser zu bestimmen, das sich im Laufe der Zeit in einem Lagertank für Flüssiggas unterhalb von dem Flüssiggas ansammeln könnte.

Um die Dichte des Flüssiggases in dem Lagertank messen zu können, ist das Füllstand- und Trennschichtmesssystem 1 mit einer zusätzlichen Komponente versehen, nämlich einer Dichtebestimmungsvorrichtung 10.

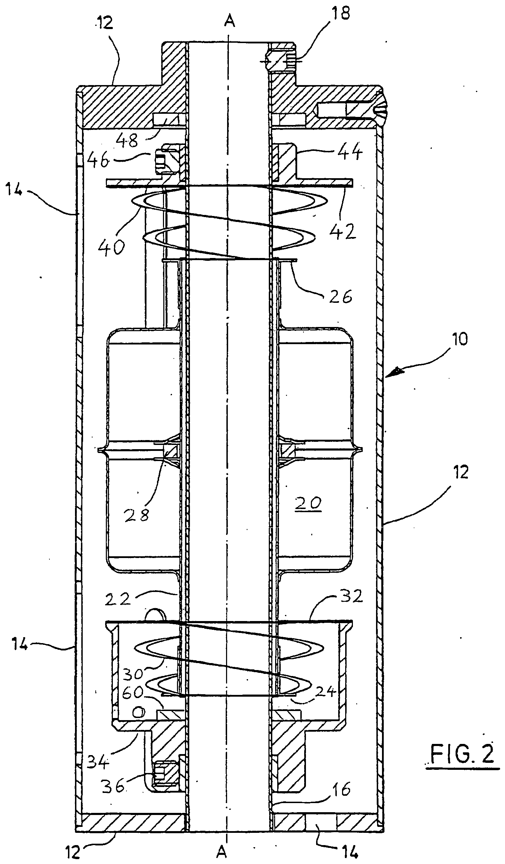

Die Dichtebestimmungsvorrichtung 10 ist in Figur 2 in einem vergrößerten Längsschnitt dargestellt.

Die Dichtebestimmungsvorrichtung 10 weist ein zylinderartiges Gehäuse 12 auf, dessen Mantelfläche und untere Stirnfläche mit Öffnungen 14 versehen sind, damit die Flüssigkeit bzw. der Kraftstoff (bzw. das Flüssiggas), deren bzw. dessen Dichte bestimmt werden soll, problemlos ins Gehäuseinnere eintreten kann. Als innerer Abschluss des Gehäuses 12 ist ein Führungsrohr 16 vorgesehen, das sich entlang der Längsachse A des Gehäuses 12 erstreckt.

Die Dichtebestimmungsvorrichtung 10 lässt sich mit dem Führungsrohr 16 über das Schutzrohr 2 schieben und daran mit Hilfe einer Stellschraube feststellen. Die Stellschraube wird durch eine Gewindebohrung 18 gedreht, die sich im oberen Endbereich des Gehäuses 12 befindet.

Im Innenraum des Gehäuses 12 befindet sich ein hohler Auftriebskörper 20. Der Auftriebskörper 20 ist mit einer Aussparung versehen, in die ein Führungszylinder 22 eingelassen ist. Der Führungszylinder 22 ist länger, als der Auftriebskörper 20 hoch ist, so dass der Führungszylinder 22 sowohl nach oben als auch nach unten gegenüber dem Auftriebskörper 20 vorsteht. Der Innendurchmesser des Führungszylinders 22 ist etwas größer als der Außendurchmesser des Führungsrohrs 16. Der Führungszylinder 22 ist an den Austrittsstellen aus dem Auftriebskörper 20 dicht versiegelt. Am unteren Ende des Führungszylinders 22 ist ein flanschartig vorspringender unterer Anschlag 24 angebracht, am oberen Ende ein ähnlich geformter oberer Anschlag 26.

Im Innenraum des Auftriebkörpers 20 befindet sich ein Magnet 28, dessen Position entlang der Achse A mit Hilfe des magnetostriktiven Positionsmesssystems bestimmt werden kann.

Eine als Spiralblattfeder (siehe Figur 3) gestaltete Feder 30 ist mit ihrem oberen Ende an einer Befestigungsebene 32 an einem hochstehenden Rand eines unteren Anschlagkörpers 34 befestigt. Das untere Ende der Feder 30 ist an dem unteren Anschlag 24 des Führungszylinders 22 befestigt. Der untere Anschlagkörper 34 ist mit einer Madenschraube 36 an dem Führungsrohr 16 arretiert.

Eine im Ausführungsbeispiel baugleich mit der Feder 30 gestaltete Feder 40 ist mit ihrem oberen Ende an einer Befestigungsebene 42 eines oberen Anschlagkörpers 44 befestigt, während das untere Ende der Feder 40 an dem oberen Anschlag 26 des Führungszylinders 22 befestigt ist. Eine Madenschraube 46 dient zum Feststellen des oberen Anschlagkörpers 44 an dem Führungsrohr 16.

Im oberen Bereich des Gehäuses 12 ist ein Referenzmagnet 48 eingelassen, der ebenfalls als Positionsgeber in dem magnetostriktiven Positionsmesssystem eingerichtet ist.

Wie bereits erwähnt, sind die Federn 30 und 40 baugleich. Sie sind beide als Spiralblattfeder 50 ausgestaltet. Die Figur 3 zeigt eine Projektion der Spiralblattfeder 50 auf die Papierebene, was einer Projektion der Feder 30 auf die Befestigungsebene 32 bzw. der Feder 40 auf die Befestigungsebene 42 entspricht.

Im Ausführungsbeispiel weist die Spiralblattfeder 50 einen Basisring 52 auf. Von dem Basisring 52 gehen um 180° gegeneinander versetzt zwei Gänge aus, nämlich ein erster Gang 54 und ein zweiter Gang 56, die jeweils spiralartig nach innen verlaufen, bis sie, wiederum um 180° gegeneinander versetzt, auf einen inneren Ring 58 treffen.

Die Spiralblattfeder 50 ist im Ausführungsbeispiel aus einem ebenen dünnen Blech ausgeschnitten, das z.B. aus Federstahl oder Edelstahl besteht. Zum Schneiden kann ein mechanisches Schneidegerät benutzt werden, aber auch die Verwendung eines Schneidlasers oder ein Ätzverfahren können vorteilhaft sein. Nach dem Ausschneiden aus dem Blechmaterial ist die Spiralblattfeder 50 also eben, was im Ausführungsbeispiel ihrem unbelasteten Zustand entspricht. Unter Belastung wird die Spiralblattfeder 50 in einer Richtung senkrecht zur Papierebene der Figur 3 auseinandergezogen, so dass sie eine dreidimensionalen Form annimmt, ähnlich wie in Figur 2 bei den Federn 30 und 40 dargestellt.

Da die Spiralblattfeder 50 aus dünnem Material gefertigt ist, ist die Breite des ersten Gangs 54 und des zweiten Gangs 56 deutlich größer als die Materialstärke. Dies bedeutet, dass der erste Gang 54 und der zweite Gang 56 gegen elastische Verformungen der Spiralblattfeder 50 in radialer Richtung, d.h. auf die Achse A zu oder von der Achse A weg, ein erheblich größeres Widerstandsmoment besitzen als bei elastischer Verformung in Richtung der Achse A.

Daher führen die Federn 30 und 40 den Auftriebskörper 20 gegen Verschiebungen in radialer Richtung sehr sicher und halten dabei den Führungszylinder 22 auf Abstand zu dem Führungsrohr 16, so dass bei einer Bewegung des Auftriebskörpers 20 keine unerwünschten Reibungskräfte auftreten. Dagegen lassen sich die Federn in Längsrichtung der Achse A leicht verformen. Sie sind also sehr empfindlich, so dass sich der Auftriebskörper 20 bereits bei kleinen Dichteänderungen nach oben oder unten verlagern kann.

Im Ausführungsbeispiel gemäß Figur 3 weist die Spiralblattfeder 50 zwei Gänge 54, 56 auf. Es ist aber auch möglich, nur einen Gang vorzusehen oder mehr als zwei Gänge. Bei drei Gängen sind die einzelnen Gänge vorzugsweise um 120° gegeneinander versetzt. Je mehr Gänge die Spiralblattfeder enthält, um so sicherer wirkt sie als Führung gegen radiale Verschiebungen, wird dabei andererseits aber auch steifer und weniger empfindlich.

Im Ausführungsbeispiel ist die Auftriebskraft des Auftriebskörpers 20, wenn er in das Flüssiggas in dem Lagertank vollständig eingetaucht ist, wegen der geringen Dichte des Flüssiggases geringer als sein Gewicht, wie weiter oben erläutert. Daher würde er in Flüssiggas nicht nach oben steigen und mit dem unteren Anschlag 24 des Führungszylinders 22 an einem Anschlagring 60 am Boden des unteren Anschlagkörpers 34 anliegen. Da aber in diesem Zustand sowohl die Feder 30 als auch die Feder 40 ausgelenkt sind und beide Federn 30, 40 eine nach oben gerichtete Kraft auf den Auftriebskörper 20 ausüben, die sich zu der Auftriebskraft addiert, kann der Auftriebskörper von dem Anschlagring 60 abheben. Die Dimensionen der Anordnung und die Kraftkonstanten der Federn 30, 40 sind so eingestellt, dass dies möglich ist. Die Federn 30, 40 haben somit einen Arbeitsbereich, in dem sie als Messfedern dienen und in dem sich der Auftriebskörper 20 bewegen kann. Die Federn 30, 40 werden dabei so stark ausgelenkt oder deformiert, bis sich ein Kräftegleichgewicht einstellt. Bei einer anderen Dichte der Flüssigkeit ist die Auftriebskraft anders und folglich im Kräftegleichgewicht auch die von den Federn 30, 40 ausgeübte Kraft, so dass sich der Auftriebskörper 20 bei diesem neuen Kräftegleichgewicht an einer anderen Position befindet. Die Gleichgewichtsposition des Auftriebskörpers 20 kann mit Hilfe des magnetostriktiven Positionsmesssystems über den als Positionsgeber dienenden Magneten 28 ermittelt werden.

Die Gleichgewichtsposition bzw. der Verschiebeweg des Auftriebskörpers 20 ist also in eindeutiger Weise mit der Dichte der Flüssigkeit bzw. des Flüssiggases verknüpft. Der Verschiebeweg verläuft weitgehend linear mit der Dichte mit einem geringen quadratischen Anteil. Die Parameter der Verknüpfung zwischen Dichte und Verschiebeweg können durch eine Kalibrierungsmessung bestimmt und auf das magnetostriktive Messsystem übertragen werden.

Der Referenzmagnet 48 kann ebenfalls als Positionsgeber in dem magnetostriktiven Positionsmesssystem benutzt werden. Daher kann die Dichtebestimmungsvorrichtung 10 verwendet werden, ohne dass Kalibrationsmessungen für die absolute Höhe des Magneten 28 durchgeführt werden müssen. Die elastische Deformation der Feder 30 bzw. 40, die aufgrund des erläuterten Gleichgewichts ein Maß für die Dichte des Kraftstoffs ist, ergibt sich aus der Differenz der Positionen des Magneten 28 und des Referenzmagneten 48.

Die Positionen des Magneten 28 und des Referenzmagneten 48 werden mit hoher Präzision mit dem magnetostriktiven Positionsmesssystem gemessen. Mit den vorhandenen und abgespeicherten Kalibrationsdaten wird im Ausführungsbeispiel durch den im magnetostriktiven Positionsmesssystem vorhandenen Mikrocontroller aus den Positionen der Magneten der Dichtewert der Flüssigkeit berechnet. Dieser Wert kann dann über eine Schnittstelle übertragen und an geeigneter Stelle zur Anzeige gebracht werden bzw. für weitere Berechnungen und Bewertungen verwendet werden. Z.B. kann mit einem bekannten Wärmeausdehnungskoeffizienten die auf eine Referenztemperatur bezogene Dichte berechnet werden. Dies erleichtert einen Vergleich bezüglich der Qualitätsbewertung des gelagerten Produkts.

Im Prinzip ist auch eine Messung ohne den Referenzmagneten 48 möglich. Als Bezug kann dann z.B. die Position des Magneten in dem Auftriebskörper an seinem unteren Anschlagspunkt gewählt werden, nachdem die Dichtebestimmungsvorrichtung auf dem Schutzrohr 2 des magnetostriktiven Positionsmesssystem fixiert ist.

Die Möglichkeit, entlang eines magnetostriktiven Positionsmesssystems mehrere Dichtebestimmungsvorrichtungen anzuordnen, wurde bereits eingangs erläutert. Ferner finden sich dort Ausführungen zu den Anwendungsmöglichkeiten, insbesondere im Bereich einer Tankstelle.

## Patentansprüche

1. Verfahren zum Bestimmen der Dichte eines Flüssiggases, wobei eine Vorrichtung mit einem Auftriebskörper (20) und mit mindestens einer an dem Auftriebskörper (20) angreifenden Messfeder (30, 40), deren elastische Deformation ein Maß für die Auftriebskraft des Auftriebskörpers (20) in einer Flüssigkeit ist, verwendet wird, wobei der Quotient aus Masse und Volumen des Auftriebskörpers (20) größer ist als die zu bestimmende Dichte und der Auftriebskörper (20) durch Federkraft in Richtung der Auftriebskraft in einen Arbeitsbereich der Messfeder (30, 40) vorgespannt wird, wobei die Vorrichtung einen Magneten (28) aufweist, der für die Erfassung der elastischen Deformation der Messfeder (30, 40) mittels eines magnetostriktiven Positionsmesssystems (1) eingerichtet ist, wobei der Auftriebskörper (20) vollständig in das Flüssiggas eingetaucht wird und die Auftriebskraft des Auftriebskörpers (20) über die elastische Deformation der Messfeder (30, 40) mittels des magnetostriktiven Positionsmesssystems (1) bestimmt wird.

2. Verfahren nach Anspruch 1, **dadurch gekennzeichnet, dass** die Messfeder (30, 40) dazu eingerichtet ist, die zum Vorspannen des Auftriebskörpers (20) in Richtung der Auftriebskraft dienende Federkraft auszuüben.

3. Verfahren nach Anspruch 2, **dadurch gekennzeichnet, dass** der Auftriebskörper (20) an der Messfeder (30, 40) aufgehängt ist.

4. Verfahren nach Anspruch 3, **dadurch gekennzeichnet, dass** der Auftriebskörper (20) ohne Einwirkung der Auftriebskraft an einem Anschlag (34, 60) anliegt und unter Einwirkung der Auftriebskraft einen Abstand zu dem Anschlag (34, 60) aufweist.

5. Verfahren nach einem der Ansprüche 1 bis 4, **dadurch gekennzeichnet, dass** die Messfeder (30, 40) als Spiralblattfeder (50) gestaltet ist, die vorzugsweise aus einem ebenen Blech gefertigt ist.

6. Verfahren nach einem der Ansprüche 1 bis 5, **dadurch gekennzeichnet, dass** der Auftriebskörper (20) einen oberen Bereich und einen unteren Bereich aufweist und dass zwei Messfedern (30, 40) vorgesehen sind, die vorzugsweise von gleicher Bauart sind, wobei die eine Messfeder (40) am oberen Bereich des Auftriebskörpers (20) und die andere Messfeder (30) am unteren Bereich des Auftriebskörpers (20) angreift.

7. Verfahren nach einem der Ansprüche 1 bis 6, **gekennzeichnet durch** einen fixierten Referenzmagneten (48), wobei die Differenz der Positionen des Magneten (28) und des Referenzmagneten (48) entlang eines Messdrahts des magnetostriktiven Positionsmesssystems (1) ein Maß für die zu bestimmende elastische Deformation der Messfeder (30, 40) ist.

8. Verfahren nach einem der Ansprüche 1 bis 7, **dadurch gekennzeichnet, dass** der Auftriebskörper (20) eine Aussparung zur Aufnahme eines Führungsrohrs (16) aufweist.

9. Verfahren nach einem der Ansprüche 1 bis 8, **dadurch gekennzeichnet, dass** ein magnetostriktives Positionsmesssystem verwendet wird, das bei einem in einem Lagertank für Flüssiggas vorhandenen Füllstandmesssystem (1) und/oder Trennschichtmesssystem (1) vorgesehen ist, wobei der Lagertank vorzugsweise ein Lagertank auf einer Tankstelle oder in einem Tanklager oder ein Nutzlasttank eines Tanckraftfahrzeugs ist.

10. Verfahren nach Anspruch 9, **dadurch gekennzeichnet, dass** durch mehrere Auftriebskörper mit zugeordneten Messfedern und Magneten, die in unterschiedlichen Höhen des magnetostriktiven Positionsmesssystems angeordnet sind, die Dichte in unterschiedlichen Höhen des Lagertanks bestimmt wird.

11. Verfahren nach Anspruch 9 oder 10, **dadurch gekennzeichnet, dass** für die Bestimmung der Dichte erforderliche Rechenoperationen auf einem in der Nähe des Lagertanks vorhandenen Rechner durchgeführt werden, wobei vorzugsweise aus einem bekannten Volumen des Flüssiggases und aus der bestimmten Dichte des Flüssiggases die Masse des Flüssiggases berechnet wird, und/oder wobei die bestimmte Dichte des Flüssiggases einem vorgegebenen Dichtebereich als Maß für die Zusammensetzung und/oder Qualität des Flüssiggases zugeordnet wird.

12. Verfahren nach einem der Ansprüche 1 bis 11, **dadurch gekennzeichnet, dass** ein Alarm und/oder eine Notfallabschaltung ausgelöst wird, wenn die bestimmte Dichte außerhalb eines vorgegebenen Bereichs liegt.

13. Verfahren nach einem der Ansprüche 1 bis 12, **dadurch gekennzeichnet, dass** im Laufe der Zeit bestimmte Werte für die Dichte aufgezeichnet werden, wobei vorzugsweise auch die Temperatur des Flüssiggases gemessen wird und die gemessenen Temperaturwerte zusammen mit den zugeordneten bestimmten Werten für die Dichte aufgezeichnet werden.

## Claims

1. Method of determining the density of a liquefied gas, wherein a device comprising a buoyancy body (20) and at least one measuring spring (30, 40) acting on the buoyancy body (20), the elastic deformation of which is a measure for the buoyancy force of the buoyancy body (20) in a liquid, is used, the quotient of mass and volume of the buoyancy body (20) being greater than the density to be determined and the buoyancy body (20) being biased by spring force in the direction of the buoyancy force in an operational range of the measuring spring (30, 40), wherein the device comprises a magnet (28), which is adapted for sensing the elastic deformation of the measuring spring (30, 40) by means of a magnetostrictive position measuring system (1), wherein the buoyancy body (20) is completely immersed in the liquefied gas and the buoyancy force of the buoyancy body (20) is determined via the elastic deformation of the measuring spring (30, 40) by means of the magnetostrictive position measuring system (1).

2. Method according to claim 1, **characterized in that** the measuring spring (30, 40) is adapted to exert the spring force serving for biasing the buoyancy body (20) in the direction of the buoyancy force.

3. Method according to claim 2, **characterized in that** the buoyancy body (20) is suspended at the measuring spring (30, 40).

4. Method according to claim 3, **characterized in that** the buoyancy body (20), when not exposed to the buoyancy force, abuts at a stop (34, 60) and, when exposed to the buoyancy force, has a distance to the stop (34, 60).

5. Method according to any one of claims 1 to 4, **characterized in that** the measuring spring (30, 40) is designed as a spiral leaf spring (50), which preferably is made from a plane sheet metal.

6. Method according to any one of claims 1 to 5, **characterized in that** the buoyancy body (20) comprises an upper region and a lower region and that two measuring springs (30, 40) are provided, which preferably are of the same type, wherein one measuring spring (40) engages at the upper region of the buoyancy body (20) and the other measuring spring (30) engages at the lower region of the buoyancy body (20).

7. Method according to any one of claims 1 to 6, **characterized by** a fixed reference magnet (48), wherein the difference of the positions of the magnet (28) and the reference magnet (48) along the measurement wire of the magnetostrictive position measuring system (1) is a measure for the elastic deformation of the measuring spring (30, 40) to be determined.

8. Method according to any one of claims 1 to 7, **characterized in that** the buoyancy body (20) comprises a recess for accommodating a guide tube (16).

9. Method according to any one of claims 1 to 8, **characterized in that** a magnetostricitive position measuring system is used, which is provided in a liquid level measuring system (1) and/or a boundary layer measuring system (1) present in a storage tank for liquefied gas, wherein the storage tank preferably is a storage tank at a fuel station or a fuel depot or in a payload tank of a tank motor vehicle.

10. Method according to claim 9, **characterized in that** the density is determined at different levels of the storage tank by means of several buoyancy bodies having measuring springs and magnets associated therewith, which are arranged at different levels of the magnetostrictive position measuring system.

11. Method according to claim 9 or 10, **characterized in that** calculational operations required for the determination of the density are performed on a computer present in the vicinity of the storage tank, wherein preferably the mass of the liquefied gas is calculated from a known volume of the liquefied gas and from the determined density of the liquefied gas, and/or wherein the determined density of the liquefied gas is assigned to a predetermined density range as a measure for the composition and/or quality of the liquefied gas.

12. Method according to any one of claims 1 to 11, **characterized in that** an alarm and/or an emergency shutdown is activated if the determined density is outside of a predetermined range.

13. Method according to any one of claims 1 to 12, **characterized in that** determined values for the density are recorded during a period of time, wherein preferably the temperature of the liquefied gas is measured as well and the measured temperature values are recorded together with the assigned determined values for the density.

## Revendications

1. Procédé de détermination de la densité d'un gaz liquide, selon lequel on utilise un dispositif comprenant un flotteur (20) et au moins un ressort de mesure (30, 40) qui agit sur le flotteur (20) et dont la déformation élastique constitue une mesure de la flottabilité du flotteur (20) dans un liquide, le quotient de la masse et du volume du flotteur (20) étant supérieur à la densité à déterminer, et le flotteur (20) étant précontraint par une force de ressort dans le sens de la force de flottabilité, vers une plage de fonctionnement du ressort de mesure (30, 40), le dispositif comprenant un aimant (28) qui est conçu pour la détection de la déformation élastique du ressort de mesure (30, 40) au moyen d'un système de mesure de position (1) magnétostrictif, sachant que le flotteur (20) est complètement immergé dans le gaz liquide, et la flottabilité du flotteur (20) est déterminée par l'intermédiaire de la déformation élastique du ressort de mesure (30, 40) à l'aide du système de mesure de position (1) magnétostrictif.

2. Procédé selon la revendication 1, **caractérisé en ce que** le ressort de mesure (30, 40) est conçu pour exercer la force élastique servant à la précontrainte du flotteur (20) dans le sens de la flottabilité.

3. Procédé selon la revendication 2, **caractérisé en ce que** le flotteur (20) est suspendu au ressort de mesure (30, 40).

4. Procédé selon la revendication 3, **caractérisé en ce qu'**en l'absence d'action de la flottabilité, le flotteur (20) est en contact avec une butée (34, 60) et, en présence de l'action de la flottabilité, est espacé de la butée (34, 60).

5. Procédé selon l'une des revendications 1 à 4, **caractérisé en ce que** le ressort de mesure (30, 40) est réalisé sous la forme d'une lame de ressort en spirale (50) qui est de préférence constituée d'un matériau de tôle plan.

6. Procédé selon l'une des revendications 1 à 5, **caractérisé en ce que** le flotteur (20) présente une partie supérieure et une partie inférieure, et qu'il est prévu deux ressorts de mesure (30, 40), de préférence du même type de construction, l'un des ressorts de mesure (40) agissant sur la partie supérieure du flotteur (20) et l'autre ressort de mesure (30) agissant sur la partie inférieure du flotteur (20).

7. Procédé selon l'une des revendications 1 à 6, **caractérisé en ce qu'**il prévoit un aimant de référence (48) fixe, où la différence des positions de l'aimant (28) et de l'aimant de référence (48), le long d'un fil de mesure du système de mesure de position (1) magnétostrictif, constitue une mesure de déformation élastique du ressort de mesure (30, 40) devant être déterminée.

8. Procédé selon l'une des revendications 1 à 7, **caractérisé en ce que** le flotteur (20) présente un évidement destiné à recevoir un tube de guidage (16).

9. Procédé selon l'une des revendications 1 à 8, **caractérisé en ce que** l'on utilise un système de mesure de position magnétostrictif qui est prévu pour un système de mesure de niveau (1) et/ou un système de mesure d'interface (1) dans un réservoir de stockage de gaz liquide, le réservoir de stockage étant de préférence un réservoir d'une station-service ou d'un parc de réservoirs ou un réservoir de chargement d'un camion-citerne.

10. Procédé selon la revendication 9, **caractérisé en ce que** la densité est déterminée à différentes hauteurs du réservoir de stockage, à l'aide de plusieurs flotteurs avec des ressorts de mesure et des aimants associés, qui sont disposés à différentes hauteurs du système de mesure de position magnétostrictif.

11. Procédé selon la revendication 9 ou 10, **caractérisé en ce que** les opérations de calcul nécessaires à la détermination de la densité sont exécutées sur un ordinateur prévu à proximité du réservoir de stockage, en calculant de préférence la masse du gaz liquide à partir d'un volume connu du gaz liquide et de la densité déterminée du gaz liquide, et/ou en associant la densité déterminée du gaz liquide à une plage de densité prédéterminée, en tant que mesure de la composition et/ou de la qualité du gaz liquide.

12. Procédé selon l'une des revendications 1 à 11, **caractérisé en ce qu'**une alarme et/ou un arrêt d'urgence est déclenché(e) lorsque la densité déterminée se situe à l'extérieur d'une plage prédéfinie.

13. Procédé selon l'une des revendications 1 à 12, **caractérisé en ce qu'**au fil du temps, certaines valeurs pour la densité sont enregistrées, et où l'on mesure de préférence également la température du gaz liquide, et on enregistre les valeurs de température mesurées, conjointement avec les valeurs déterminées associées pour la densité.
